# EUROPÄISCHE PATENTSCHRIFT

(11) **EP 3 667 854 B1**
(45) Veröffentlichungstag und Bekanntmachung des Hinweises auf die Patenterteilung: **12.07.2023**
(21) Anmeldenummer: 18212397.6
(22) Anmeldetag: 13.12.2018
(51) Int. Cl.: H02J 3/18

(54) **VERFAHREN ZUR NUTZBARMACHUNG EINES BLINDLEISTUNGSPOTENTIALS**
METHOD FOR MAKING USEFUL POTENTIAL REACTIVE POWER
PROCÉDÉ D'UTILISATION D'UN POTENTIEL DE LA PUISSANCE RÉACTIVE

(43) Veröffentlichungstag der Anmeldung: 17.06.2020
(73) Patentinhaber: Siemens Aktiengesellschaft, 80333 München (DE)
(72) Erfinder: Zeilinger, Franz, 1150 Wien (AT); Einfalt, Alfred, 1210 Wien (AT); Frischenschlager, Albin, 1230 Wien (AT)
(74) Vertreter: Siemens Patent Attorneys

(56) Entgegenhaltungen:
- WO-A1-2012/122454
- WO-A1-2015/193199
- US-A1- 2016 172 857

## Beschreibung

### Technisches Gebiet

Die vorliegende Erfindung betrifft allgemein das Gebiet der Energieverteilungsnetze und der Energieversorgung. Im Speziellen bezieht sich die vorliegende Erfindung auf ein Verfahren zur Nutzbarmachung einer in einem Abschnitt eines Verteilnetzes, insbesondere eines Niederspannungsnetzes, verfügbaren Blindleistung. Dabei weist der Abschnitt des Verteilnetzes zumindest eine Blindleistungsquelle (z.B. eine Wechselrichtereinheit zum Anbinden einer dezentralen Energieerzeugungseinheit) auf.

### Stand der Technik

Unter einem Energieversorgungsnetz wird üblicherweise ein Netzwerk von elektrischen Leitungen verstanden, durch welches elektrische Energie von Energieerzeugern (z.B. konventionelle Kraftwerksbetreiber, etc.) zu den Verbrauchern (z.B. Industrieunternehmen, Haushalte, etc.) transportiert und verteilt wird. Für diesen Transport sind üblicherweise drei Versorgungsebenen vorgesehen, welche im Prinzip Netze bzw. Netzebenen mit verschiedenen, festgelegten Spannungsbereichen, bei welchen elektrische Energie übertragen wird, und mit entsprechenden Verteilfunktionen sind.

Üblicherweise gibt es in einem Energieversorgungsnetz eine Übertragungs- oder Hochspannungsebene, eine Verteilungs- oder Mittelspannungsebenen und eine weitere (Fein-)Verteilungs- oder Niederspannungsebene. In der Übertragungs- bzw. Hochspannungsebene (z.B. in Europa mit einem Spannungsbereich von 60kV (Kilovolt) bis 380kV und höher) wird beispielsweise von großen Erzeugern (z.B. großen Wasserkraftwerken, Wärme- oder kalorischen Kraftwerken oder großen Windparks) erzeugte Energie eingespeist. Die Energie wird dann z.B. über Leistungstransformatoren in Umspannwerken an die Verteilungs- oder Mittelspannungsebene übertragen, welche in einem Mittelspannungsbereich (z.B. 1 kV bis ca. 60 kV in Europa) betrieben wird. Durch die Verteilungsebene bzw. die Mittelspannungsnetze wird die elektrische Energie üblicherweise an regional verteilte Transformatorstationen und/oder größer Einrichtungen wie z.B. Spitäler, Industriebetriebe, etc. verteilt. Eine Verteilung der Energie an den größten Teil der elektrischen Endverbraucher erfolgt üblicherweise von der Feinverteilungs- oder Niederspannungsebenen bzw. den Niederspannungsnetzen übernommen. In einem Niederspannungsnetz wird z.B. in Mitteleuropa ein Spannungsbereich zwischen ca. 230/400 Volt bis zu 1000 Volt genutzt. Die Niederspannungsebene bzw. die Niederspannungsnetze werden üblicherweise aus der übergeordneten Mittelspannungsebene bzw. von übergeordneten Mittelspannungsnetzen über Transformatorstationen gespeist. Insbesondere bezeichnet der Begriff Niederspannungsnetz auch einen Abschnitt des (Fein-)Verteilnetzes, welcher von einem bestimmten Ortsnetztransformator bzw. einer bestimmten Ortsnetzstation als Schnittstelle zur übergeordneten Netz- bzw. Mittelspannungsebene mit Energie versorgt wird.

Viele der heutzutage im Betrieb befindlichen Energieversorgungsnetze wurden vor langer Zeit - meist vor mehr als fünfzig Jahren - in ihrer Struktur und Topologie konzipiert. Diese Energieversorgungsnetze weisen meist eine zentrale bzw. hierarchische Struktur auf, bei welcher die benötigte Energie in einer obersten Versorgungsebene - d.h. in der Übertragungsebene - eingespeist und von dieser an die darunterliegenden Versorgungsebenen - d.h. die Mittelspannungs- und Niederspannungsebene - und zu den dort angebundenen Verbrauchern weitergeleitet wird. Auf der obersten Versorgungsebene bzw. der Übertragungsebene wird üblicherweise eine automatisierte Regelung durchgeführt und das gesamte Energieversorgungsnetz ist durch den Verbrauch bzw. Bedarf auf den unteren beiden Versorgungsebenen gesteuert.

Durch eine zunehmende Durchdringung mit dezentralen, meist erneuerbaren Energieerzeugungsanlagen - kurz DEA - wie z.B. Photovoltaikanlagen, Windkraftanlagen, etc. ist der klassische Betrieb von Energieversorgungsnetzen allerdings vor gro-βe Herausforderungen gestellt. Dazu kommt die Entwicklung der Elektromobilität und damit eine Verstärkung der Substitution von anderen Energieübertragungsformen durch Elektrizität. Als Lösung werden häufig so genannte Intelligente Stromnetze (Smart Grids) gesehen, welche eine kommunikative Vernetzung und Steuerung von Stromerzeugern, Speichern, elektrischen Verbrauchern und Netzbetriebsmitteln in der Übertragungs- und den Verteilungsebenen des Energieversorgungsnetzes umfassen.

Ein besonderer Aspekt ist dabei z.B. eine zunehmende Durchdringung von so genannten Prosumern in den unteren Ebenen des Energieversorgungsnetzes - d.h. in der Mittelspannungs- und Niederspannungsebene. Prosumer sind beispielsweise Verbraucher, welche zusätzlich eine dezentrale Energieerzeugungsanlage (DEA) (z.B. meist Photovoltaik, eine kleine Windkraftanlage, etc.) betreiben und Energie in das Energieversorgungsnetz einspeisen. Dadurch entstehen beispielsweise in den untersten Ebenen des Energieversorgungsnetzes, insbesondere in der Niederspannungsebene, neue Quellen für Flexibilität, welche für unterschiedliche, netzdienliche Steuer- und Regelaufgaben verwendet werden können. Dazu müssen diese neuen Quellen allerdings an ein übergeordnetes Steuer-/Regelsystem angebunden werden, insbesondere auch, um die unter Energiewende zusammenfassbaren Entwicklungen (z.B. dezentrale Energieerzeuger, flexible Verbraucher bzw. Prosumer, Elektromobilität, etc.) langfristig systemverträglich gestaltbar zu machen. Beispielweise muss in Zukunft ein Verteilnetz (z.B. Mittel- und/oder Niederspannungsnetz) ähnlich lückenlos beobachtbar sein bzw. automatisiert gesteuert werden können wie ein Übertrags- bzw. Hochspannungsnetz.

Dazu werden in modernen Netzleitzentralen z.B. für Verteilnetze zunehmend spezielle Anwendungen in so genannten Distribution Management Systemen (DMS) eingesetzt wie z.B. eine so genannte Distribution System State Estimation (DSSE) oder eine so genannte Volt/Var-Control (VVC). Die Bezeichnung Distribution Management System oder DMS wird bei Smart Grids für ein zentrales System in einem Kontrollzentrum genutzt, von welchem die elektrische Stromverteilung im Verteilnetz überwacht, verwaltet und kontrolliert wird. Ein DMS verwaltet üblicherweise die energieerzeugenden Anlagen, die Energiespeicher, die Energieverteilung und das Lastmanagement mit Steuerung elektrischer Verbraucher mittels so genannter Demand Response. Dazu werden vom DMS Echtzeitinformationen genutzt, um z.B. für eine kurzfristige Wiederherstellung der Stromversorgung, eine Verkürzung von Ausfallszeiten sowie für eine verbesserte Versorgungszuverlässigkeit und akzeptable Frequenz- und Spannungswerte zu sorgen. Das DMS kann weiterhin Schnittstellen zu anderen Systemen wie z.B. geografischen Informationssystemen (GIS), Outage Management Systemen (OMS) oder Customer Information Systemen (CIS) aufweisen.

Die so genannte Distribution System State Estimation- oder DSSE-Anwendung ist ein integraler Bestandteil eines DMS und soll verlässliche Schätzwerte für im jeweiligen Verteilnetz vorliegende Spannungen liefern. Meist wird von der DSSE ein Wert für einen Abstand der Spannung zu vorgegebenen Grenzwerten - oft auf teilweise ungenaue und/oder fehlende Messwerte gestützt - ermittelt. Mit der Volt/Var Control- bzw. VVC-Anwendung kann ein Spannungsniveau sowie die Blindleistung in einem Verteilnetz gemanagt bzw. geregelt werden. Dazu werden von der Volt/Var Control Einrichtungen, welche Blindleistung in das Verteilnetz einbringen können, als so genannte Aktuatoren - wie z.B. Regelumformer in Umspannwerken, so genannte flexible AC Transmission Systeme (FACTS), mittelgroße Kraftwerke sowie noch in relativ geringem Ausmaß regelbare Ortsnetztransformatoren - benötigt, um beispielsweise mittels Blindleistungsmanagement bzw. -regelung das Verteilnetz spannungsmäßig zu stabilisieren.

Durch den Ausbau dezentraler Energieerzeugeranlagen, insbesondere durch Photovoltaik-(PV)-Anlagen, in den Niederspannungsnetzen sind beispielsweise zusätzliche Quellen für Blindleistung bzw. Aktuatoren für die VVC entstanden. So sind Wechselrichter von PV-Anlagen z.B. in der Lage spannungsgesteuert einen Blindleistungsanteil zur Spannungsstabilisierung - induktive oder kapazitive Blindleistung - bereit zu stellen bzw. zu beziehen. Dieser Blindleistungsanteil (Q) ist abhängig von einer Spannung (U) an einem Einspeisepunkt und kann mittels einer so genannten Blindleistungscharakteristik bzw. -kennlinie Q(U) beschrieben werden. Einem Wechselrichter einer PV-Anlage kann dadurch ein relativer Blindleistungswert (Q) in Abhängigkeit einer aktuellen Spannung (U) am Einspeisepunkt vorgegeben werden. Neben Wechselrichtern von PV-Anlagen kann eine Q(U)-Charakteristik beispielsweise auch von leistungselektronischen Umrichtern (z.B. zum Anbinden von elektrochemischen Speichersystemen) und/oder anderen Wechselrichtern umgesetzt werden. Die Wechselrichter können in einen Verteilnetz dazu genutzt werden, um durch eine entsprechende spannungsabhängige Blindleistungsvorgabe (d.h. Blindleistungslieferung oder -bezug) spannungsstützend im jeweiligen Verteilnetz zu wirken. Netzbetreiber können z.B. durch entsprechende Netzanschlussvorschriften ein derartiges Verhalten für Wechselrichter als Blindleistungsquellen vorschreiben.

Weiterhin arbeiten in modernen Netzleitzentralen die Anwendungen wie z.B. DSSE, VVC im DMS mit Lastmodellen bzw. auch zunehmend mit Erzeugungsmodellen für einzelne Netzknoten, an denen größere Lasten (z.B. Industriebetrieben, etc.), größere Erzeuger (z.B. (Klein-)Wasserkraftwerke) und auch eine große Zahl an Niederspannungs-(orts-)netzen angeschlossen sind. Diese Niederspannungs- bzw. Ortsnetze werden dabei meist als passive Last mit z.B. so genannten Standard-Lastprofilen oder gegebenenfalls mit so genannten worst-case Erzeugerprofilen modelliert. Es ist zwar zu erwarten, dass diese passiven Modelle zukünftig genauer werden, da anstelle von standardisierten Lastprofilen z.B. kumulierte Profile basierend auf Smartmeter-Daten verfügbar sein werden. Die Last- bzw. Erzeugungsmodelle für die DMS-Anwendungen (z.B. DSSE, VVC) werden aber z.B. statisch parametriert und meist über einige ausgewählte Messpunkte skaliert. Dabei wird ein individualisiertes, dynamisches Verhalten bislang nicht berücksichtigt.

Falls beispielsweise in einem Verteilnetz der Mittelspannungsebene alle Blindleistungspotentiale - d.h. alle möglichen Blindleistungsanteile von möglichen Blindleistungslieferanten/-beziehern (z.B. kleinere Kraftwerke, Industriebetriebe, etc.) - zur Spannungsstabilisierung ausgeschöpft sind, werden z.B. meist zusätzliche Netzelemente wie z.B. so genannte flexible AC Transmission Systeme oder FACTS installiert, um einen stabilen Betrieb zu garantieren. Eine derartige Vorgehensweise ist allerdings meist mit zusätzlichen Kosten verbunden.

Derzeit ist es aber nicht möglich, für einen Abschnitt eines Verteilnetzes bzw. eines Niederspannungsnetzes mit Blindleistungsquellen (wie z.B. Wechselrichtern zur Anbindung von dezentralen Energieerzeugungseinheiten) potentiell verfügbare induktive und kapazitive Blindleistung (= Blindleistungspotential) abzuschätzen und z.B. eine aktuell verfügbare Blindleistung bzw. Blindleistungspotential an ein entsprechendes, übergeordneten Steuer- und Regelsystem (wie z.B. eine VVC in einem DMS) zu melden sowie im Bedarfsfall einer übergeordneten Netzebene bereitzustellen. Durch die zunehmende Durchdringung von Prosumern in den unteren Netzebenen, vor allem in der Niederspannungsebene, welche Erzeugungsanlagen und bald vermehrt Speichersysteme (z.B. aufgrund von E-Mobilität) betreiben, und einer Nutzung der Q(U)-Charakteristik und gegebenenfalls anderer Regelungsstatiken für Wechselrichter wird z.B. eine Verwendung von entkoppelten, statischen Modellen aufgrund einer zunehmenden Korrelation von Last und Erzeugung bzw. aufgrund neuer Korrelationen mit z.B. Markteinflüssen oder Mobilitätsverhalten obsolet. Es wird daher notwendig, einzelne Netze, insbesondere Niederspannungsnetze, individuell bezüglich einer möglichen Bereitstellung von Blindleistung z.B. als Netzdienstleistung zu betrachten und auch entsprechende Stellbefehle aus dem übergeordneten Steuer- und Regelsystem z.B. an Netzschnittstellen wie z.B. in Transformatorstationen, Ortsnetzstationen, etc. umzusetzen.

Aus der bisher unveröffentlichten europäischen Patentanmeldung mit dem Aktenzeichen EP18212287.9 der Anmelderin ist beispielsweise ein computerimplementiertes Verfahren zur Erstellung von dynamischen Modellen von Netzknoten in einem Niederspannungs- und/oder Mittelspannungsnetz bekannt. Bei diesem Verfahren wird auf Basis von historischen Daten das Verhalten der Netzknoten als Reaktion z.B. auf Spannungssprünge ermittelt. Darauf basieren wird eine so genannte Sensitivitätsmatrix erzeugt, welche als Basis für die Erzeugung dynamischer Netzknoten als Eingangsgröße für z.B. DSSE und/oder VVC-Anwendungen dient. Dieses Verfahren weist allerdings den Nachteil auf, dass es mit einem relativ hohen Modellierungsaufwand bzw. sehr kostspieligen Performanceanforderungen an die jeweiligen Rechnereinheiten verbunden ist, um z.B. ein dynamisches Verhalten der Netzknoten für übergeordnete Anwendungen bereitzustellen.

WO2012122454A1 zeigt ein Verfahren zur Nutzbarmachung einer in einem Abschnitt eines Verteilnetzes verfügbaren Blindleistung entsprechend des Oberbegriffs von Anspruch 1.

### Darstellung der Erfindung

Der Erfindung liegt daher die Aufgabe zugrunde, ein Verfahren zur Nutzbarmachung einer potentiell verfügbaren Blindleistung bzw. eines Blindleistungspotentials in einem Abschnitt eines Verteilnetzes, insbesondere Niederspannungsnetzes, anzugeben, durch welches auf einfache und leicht integrierbare Weise eine Blindleistung, welche aktuell in einem Netzabschnitt verfügbar gemacht werden kann, ermittelt, einem übergeordneten Steuer- und Regelsystem gemeldet und gegebenenfalls spannungsstabilisierend genutzt werden kann.

Diese Aufgabe wird durch ein Verfahren der eingangs beschriebenen Art mit den Merkmalen des unabhängigen Anspruchs gelöst. Vorteilhafte Ausführungsformen der vorliegenden Erfindung sind in den abhängigen Ansprüchen beschrieben. Erfindungsgemäß erfolgt die Lösung der Aufgabe durch ein Verfahren der eingangs beschriebenen Art Verfahren zur Nutzbarmachung einer in einem Abschnitt eines Verteilnetzes, insbesondere eines Niederspannungsnetzes, verfügbaren Blindleistung. Dabei weist der Abschnitt des Verteilnetzes bzw. das Niederspannungsnetz zumindest eine Blindleistungsquelle wie z.B. eine über einen Wechselrichtereinheit angebundene dezentrale Energieerzeugungseinheit (erfindungsgemäss eine PV-Anlage) auf. Anhand von vorgebbaren Betriebsfällen der zumindest einen Blindleistungsquelle wird ein Blindleistungsprofil für den Abschnitt des Verteilnetzes ermittelt. Dabei wird die zumindest eine Blindleistungsquelle über eine Einheit zur Datenaufnahme und -auswertung derart beeinflusst, dass von der zumindest einen Blindleistungsquelle vorgebbaren Betriebsfälle durchlaufen werden. Auf Basis des für den Abschnitt des Verteilnetzes ermittelten Blindleistungsprofils wird von der Einheit zur Datenaufnahme und - auswertung laufend die jeweils aktuell im Abschnitt des Verteilnetzes verfügbare Blindleistung abgeschätzt und das abgeschätzte Blindleistungspotential - d.h. eine mögliche Blindleistungslieferung bzw. ein möglicher Blindleistungsbezug des Verteilnetzabschnitts bzw. des Niederspannungsnetzes - einem übergeordnetes Steuer- und Regelsystem übermittelt. Im Bedarfsfall kann dann die aktuell verfügbare Blindleistung vom Abschnitt des Verteilnetzes abgerufen werden, wobei vom übergeordneten Steuer- und Regelsystem ein entsprechender Stellbefehl mit einer erforderlichen Höhe und Richtung einer zur Verfügung zu stellenden Blindleistung an die Einheit zur Datenaufnahme und -auswertung gesendet wird. Dieser Stellbefehl kann dann beispielsweise von der Einheit zur Datenaufnahme und -auswertung entsprechend (z.B. durch Anpassen einer Einstellung einer zugehörigen Transformatoreinheit, etc.) umgesetzt werden.

Der Hauptaspekt der erfindungsgemäß vorgeschlagenen Lösung besteht darin, dass durch das erfindungsgemäße Verfahren ein in einem Abschnitt eines Verteilnetzes wie z.B. einem Niederspannungsnetz, Ortsnetz, etc. aktuell verfügbares Blindleistungspotential, welches beispielsweise durch einen vermehrten Einsatz von Blindleistungsquellen (wie z.B. Wechselrichtern zur Anbindung von PV-Anlagen oder Speichersystemen) vorhanden ist, auf einfache Weise abgeschätzt und in der Folge Steuer- und Regelsystemen wie z.B. DSSE, VVC, etc. für eine übergeordnete Netzregelung zur Verfügung gestellt wird. Durch die Nutzbarmachung des im jeweiligen Verteilnetzabschnitt bzw. Niederspannungsnetz verfügbaren Blindleistungspotentials können dann beispielsweise Kondensatorbatterie, FACTS oder Kompensationsdrosseln, welche üblicherweise für einen Blindleistungskompensation eingesetzt werden, eingespart werden. Das erfindungsgemäße Verfahren ist weiterhin leicht im laufenden Netzbetrieb umsetzbar bzw. integrierbar. D.h. auch ohne hohen Modellierungsaufwand kann beispielsweise ein dynamisches Verhalten von Blindleistungsquellen bzw. ein abgeschätztes Blindleistungspotential einem übergeordneten Steuer- und Regelsystem bzw. dessen Anwendungen zur Verfügung gestellt werden. Weiterhin bedarf die Umsetzung des erfindungsgemäßen Verfahrens z.B. keiner kostspieligen Performanceanforderungen an die ausführenden Rechnereinheiten z.B. der Einheit zur Datenaufnahme und -auswertung.

Idealerweise wird vom jeweiligen Blindleistungsprofil ein Zusammenhang zwischen einer jeweils im Abschnitt des Verteilnetzes verfügbaren Blindleistung und jeweiligen Messwerten für den Abschnitt des Verteilnetzes, insbesondere eines Wirkleistungs- und Spannungsmesswertes an einer Transformatoreinheit, beschrieben. Vom Blindleistungsprofil werden damit z.B. Zusammenhänge zwischen an der Transformatoreinheit gemessenen Spannungs- und Wirkleistungsmesswerten und einer damit verbundenen, möglichen (induktiven und kapazitiven) Blindleistung beschrieben, welche vom Verteilnetzabschnitt für eine Spannungsstabilisierung zur Verfügung gestellt werden kann.

Erfindungsgemäss werden zum Ermitteln des aktuellen Blindleistungsprofils des Abschnitts des Verteilnetzes Betriebsfälle vorgegebenen, bei welchen von der zumindest einen Blindleistungsquelle eine maximale Blindleistungslieferung und ein maximaler Blindleistungsbezug erfolgt. Auf diese Weise kann für das Blindleistungsprofil sehr einfach ein Potential für eine maximal mögliche Blindleistungslieferung bzw. einen maximal möglichen Blindleistungsbezug des Verteilnetzabschnitt bzw. des Niederspannungsnetzes ermittelt werden.

Es ist weiterhin günstig, wenn eine Ermittlung des aktuellen Blindleistungsprofil für den Abschnitt des Verteilnetzes in zeitlich vorgebbaren Abständen durchgeführt wird. Dadurch können beispielsweise Änderungen innerhalb des betrachteten Verteilnetzabschnitts bzw. Niederspannungs- bzw. Ortsnetzes wie z.B. Inbetriebnahme und/oder Wegfall neuer Blindleistungsquellen, Topologieveränderungen, etc. zeitnah erfasst werden und das Blindleistungsprofil entsprechend angepasst werden. Idealerweise wird das Blindleistungsprofil in einer relativ kurz dauernden Ermittlungsphase während des laufenden Netzbetriebs ermittelt, wobei der laufende Netzbetrieb dadurch nicht gestört werden darf.

Eine Ausgestaltung des erfindungsgemäßen Verfahrens sieht vor, dass zum Abschätzen der jeweils aktuell im Abschnitt des Verteilnetzes verfügbaren Blindleistung für den Abschnitt des Verteilnetzes aktuell gemessene Spannungs- und Wirkleistungswerte an der Transformatoreinheit verwendet werden, wobei eine aktuelle Einstellung der Transformatoreinheit berücksichtigt wird.

Weiterhin kann es günstig sein, wenn zusätzlich eine Energieeinspeiseleistung der zumindest einen Blindleistungsquelle berücksichtigt wird, welche anhand einer aktuellen Wettersituation abgeschätzt wird. D.h. es wird beispielsweise über eine aktuelle Wettersituation auf einen Energieeinspeiseleistung der jeweiligen Blindleistungsquellen, erfindungsgemäss PV-Anlagen, im Verteilnetzabschnitt rückgeschlossen. Auf diese Weise kann beispielweise die Abschätzung des Blindleistungspotential verbessert werden. Weiterhin können gegebenenfalls auch unterschiedliche Blindleistungsprofile des Verteilnetzabschnitts für unterschiedliche Wettersituationen ermittelt bzw. genutzt werden.

Eine weitere Verbesserung für das erfindungsgemäße Verfahren stellt eine zusätzliche Verwendung von aktuellen Netzspannungswerten für die Abschätzung der jeweils aktuell im Abschnitt des Verteilnetzes verfügbaren Blindleistung dar, wobei die Netzspannungswerte verteilt im Verteilnetzabschnitt bzw. Niederspannungsnetz gemessen werden. Damit kann auf einfache Weise durch eine genauere Information aus dem Verteilnetzabschnitt bzw. Niederspannungsnetz eine aktuelle Situation bezüglich einer aktuell verfügbaren Blindleistung genauer abgeschätzt werden. Bei einer entsprechenden Anzahl an Daten bzw. Spannungsmesswerten an verschiedenen Messpunkten im Verteilnetzabschnitt z.B. über eine Sprungantwort für verschiedene Einspeisesituation von verschiedenen dezentralen Energieerzeugungsanlagen bzw. Blindleistungsquellen können beispielsweise Korrelationen aus den Daten herausgeholt werden und in das in der Ermittlungsphase erstellte Blindleistungsprofil des Verteilnetzabschnitts eingearbeitet werden.

Eine zweckmäßige Weiterbildung des erfindungsgemäßen Verfahrens sieht vor, dass zusätzlich für die Abschätzung der jeweils aktuell im Abschnitt des Verteilnetzes verfügbaren Blindleistung weitere Informationen zu der zumindest einen im Abschnitt des Verteilnetzes verfügbaren Blindleistungsquelle, insbesondere eine so genannte Blindleistungscharakteristik oder Q(U)-Kennlinie, verwendet werden. Dabei ist es allerdings günstig, wenn eine Anzahl der Blindleistungsquellen im Verteilnetzabschnitt gering ist. Allerdings kann bei dieser Ausprägung des erfindungsgemäßen Verfahren eine experimentell Ermittlung des Blindleistungsprofils des Verteilnetzabschnitt gegebenenfalls entfallen. Für die Abschätzung der aktuell verfügbaren Blindleistung im Verteilnetzabschnitt stehen z.B. der Einheit zur Datenaufnahme und -auswertung neben aktuellen Messwerten an der Transformatoreinheit (z.B. Schienenspannung, Wirkleistung, etc.) und den Netzspannungswerten auch Informationen zu sämtlichen im Verteilnetzabschnitt bzw. Niederspannungs-/Ortsnetz aktiven Blindleistungsquellen, insbesondere deren Blindleistungscharakteristik bzw. Q(U)-Kennlinie, zur Verfügung. Die Einheit zur Datenaufnahme und - auswertung hat dabei weiterhin die Möglichkeit, beispielsweise über einen separaten Kommunikationskanal - die einzelnen Blindleistungsquellen aktiv zu beeinflussen.

Es ist vorteilhaft, wenn z.B. nach erfolgter Abschätzung der im Verteilnetzabschnitt aktuell verfügbaren Blindleistung bzw. am Ende einer Abschätzungsphase ein Abschätzergebnis von Einheit zur Datenaufnahme und -auswertung über eine Schnittstelleneinheit an das zentrale Steuer- und Regelsystem, insbesondere an eine Volt/Var-Control-Anwendung bzw. VVC-Anwendung übermittelt wird. Als Schnittstelle kann beispielsweise ein so genannter Advanced Message Queuing Protocol- oder AMQP-Broker verwendet werden, welche die jeweilige Information über die aktuell verfügbare Blindleistung dem zentralen Steuer- und Regelsystem wie z.B. einem Distribution Management System oder einem SCADA-System zur Verfügung stellt. Das Advanced Message Queuing Protocol (AMQP) ist z.B. ein offener Standard, welcher ein binäres Netzwerkprotokoll auf Anwendungsebene für eine nachrichtenorientiertes Middleware darstellt und unabhängig von einer Programmiersprache ist.

Es ist besonders zweckmäßig, wenn die Einheit zur Datenaufnahme und -auswertung in oder bei der Transformatoreinheit angebracht wird, von welcher der Verteilnetzabschnitt (z.B. Niederspannungsnetz bzw. Ortsnetz) mit der übergeordneten Energieversorgungsebene (z.B. Mittelspannungsnetz) verbunden wird. Die Transformatoreinheit fungiert dabei als sogenannter Ortsnetztransformatorstation bzw. Ortnetzstation. Durch die Anbringung oder Integration der Einheit zur Datenaufnahme und -auswertung kann die Transformatoreinheit zu einer so genannten aktiven bzw. intelligenten Ortsnetzstation werden. Die Transformatoreinheit umfasst dabei idealerweise einen regelbaren Ortsnetztransformator (rONT), welcher die elektrische Spannung aus dem Mittelspannungsnetz auf eine im Verteilnetzabschnitt bzw. Niederspannungs- oder Ortsnetz verwendetes niedrigeres Spannungsniveau transformiert und zusätzlich sein Übersetzungsverhältnis im laufenden Betrieb verändern kann, um so beispielsweise eine verstärkte Einspeisung von dezentralen Energieerzeugungsanlagen (z.B. PV-Anlagen, etc.) zu ermöglichen, ohne dass einen Netzspannung dadurch unzulässig ansteigt oder abfällt.

### Kurzbeschreibung der Zeichnung

Die Erfindung wird nachfolgend in beispielhafter Weise anhand der beigefügten Figuren erläutert. Dabei zeigen:
- Figur 1: einen beispielhaften Ablauf des erfindungsgemäßen Verfahren zur Nutzbarmachung einer in einem Abschnitt eines Verteilnetzes, insbesondere eines Niederspannungsnetzes, verfügbaren Blindleistung
- Figur 2a: eine beispielhafte Variante für eine Abschätzung der in einem Abschnitt eines Verteilnetzes verfügbaren Blindleistung auf Basis von Messwerten einer Transformatoreinheit
- Figur 2b: eine weitere, beispielhafte Variante für eine Abschätzung der in einem Abschnitt eines Verteilnetzes verfügbaren Blindleistung auf Basis von Messwerten einer Transformatoreinheit und Informationen über eine Energieeinspeiseleistung
- Figur 2c: eine weitere, beispielhafte Variante für eine Abschätzung der in einem Abschnitt eines Verteilnetzes verfügbaren Blindleistung auf Basis von Messwerten einer Transformatoreinheit, Informationen über eine Energieeinspeiseleistung und aktuellen Netzspannungswerten
- Figur 2d: eine weitere, beispielhafte Variante für eine Abschätzung der in einem Abschnitt eines Verteilnetzes verfügbaren Blindleistung auf Basis von Informationen über eine Energieeinspeiseleistung und aktuellen Netzspannungswerten und Blindleistungscharakteristiken der Blindleistungsquellen im Verteilnetzabschnitt

### Ausführung der Erfindung

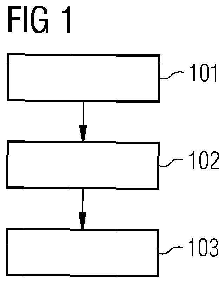

Figur 1 zeigt in schematischer Weise einen beispielhaften Ablauf des erfindungsgemäßen Verfahrens zur Nutzbarmachung einer in einem Abschnitt eines Verteilnetzes, insbesondere eines Niederspannungsnetzes bzw. Ortsnetzes, verfügbaren Blindleistung. Diese Blindleistung kann von zumindest einer im Verteilnetzabschnitt Blindleistungsquelle wie z.B. einem Wechselrichter einer PV-Anlage, einem Umrichter eines elektrochemischen Speichersystem oder einer anderen Wechselrichtereinheit zum Anbinden einer dezentralen Energieerzeugungseinheit potentiell zur Verfügung gestellt werden.

Üblicherweise sind in einem Verteilnetzabschnitt bzw. Niederspannungsnetz mehrere Blindleistungsquellen vorhanden, welche bei z.B. einer Einspeisung von elektrischer Energie bzw. Wirkleistung in Abhängigkeit von einer Spannung am Einspeisepunkt eine spannungsgesteuerte Blindleistungsunterstützung zur Verfügung stellen können. Diese Blindleistungsquellen weisen jeweils eine so genannte Blindleistungscharakteristik Q(U) bzw. Q(U)-Kennlinie auf, die aus einigen so genannten Stützstellen besteht und die für die Blindleistungsunterstützung parametriert werden kann. Dadurch kann z.B. der Blindleistungsquelle bzw. der Wechselrichtereinheit ein relativer Blindleistungswert (Q) abhängig von der aktuellen Spannung (U) am Einspeisepunkt vorgegeben werden.

Das erfindungsgemäße Verfahren besteht idealerweise aus drei Phasen: einer Ermittlungsphase 101, einer Abschätzungsphase 102 und einer Abrufphase 103.

Dabei wird in der Ermittlungsphase 101 anhand von Betriebsfällen, welche den im Verteilnetzabschnitt befindlichen Blindleistungsquellen vorgebbar sind, ein Blindleistungsprofil BP für den Verteilnetzabschnitt ermittelt. Dazu wird die zumindest eine Blindleistungsquelle des Verteilnetzabschnitts von einer Einheit zur Datenaufnahme und -auswertung iSSN derart beeinflusst, dass von der zumindest einen Blindleistungsquelle bzw. den Blindleistungsquellen im Verteilnetzabschnitt die vorgegebenen Betriebsfälle durchlaufen werden.

Die Einheit zur Datenaufnahme und -auswertung iSSN ist dabei idealerweise in oder bei einer Transformatoreinheit angebracht, durch welche der Verteilnetzabschnitt bzw. das Niederspannungs- oder Ortsnetz an eine übergeordnete Versorgungsebene wie z.B. ein Mittelspannungsnetz angebunden ist. Die Transformatoreinheit kann z.B. als aktive und intelligente Ortnetztransformatorstation - auch durch die Anbringung der Einheit zur Datenaufnahme und -auswertung iSSN - ausgestaltet sein, welche z.B. Daten und Informationen aus dem Niederspannungs-/Ortsnetz sammelt, an ein übergeordnetes Steuer- und Regelsystem SR weiterleitet und Stellbefehle (z.B. Veränderung des Übersetzungsverhältnisses, etc.) des übergeordneten Steuer- und Regelsystem SR umsetzen kann.

Für das Blindleistungsprofil BP des Verteilnetzabschnitts wird in der Ermittlungsphase 101 von der Einheit zur Datenaufnahme und -auswertung iSSN für verschiedene Einspeisesituationen, welche z.B. anhand von aktuellen Messwerten für Wirkleistung, Blindleistung, Spannung bei der Transformatoreinheit sowie einer aktuellen Einstellung bzw. Stufenstellung der Transformatoreinheit erkennbar sind, eine mögliche maximale Blindleistungslieferung und eine möglicher maximaler Blindleistungsbezug des Verteilnetzabschnitts ermittelt. Dazu werden die vorgebbaren Betriebsfälle der zumindest einen Blindleistungsquelle durchlaufen. Beispielsweise werden die im Verteilnetzabschnitt befindlichen Blindleistungsquellen abwechseln in die beiden maximalen Betriebsfälle gefahren - d.h. ein Betriebsfall, bei welchem eine maximal mögliche Blindleistungslieferung der jeweiligen Blindleistungsquelle erfolgt, und ein Betriebsfall, bei welchem ein maximal möglicher Blindleistungsbezug der jeweiligen Blindleistungsquelle erfolgt.

Dazu kann beispielsweise mit Hilfe der Transformatoreinheit, welche beispielsweise als regelbarer Transformator ausgeführt ist, eine Spannung im Verteilnetzabschnitt aktiv über die jeweiligen Ansprechgrenzen einer in der zumindest einen Blindleistungsquelle eingestellten Blindleistungscharakteristik bzw. Q(U)-Kennlinie gebracht werden, um die Q(U)-Regelung der zumindest einen Blindleistungsquelle zu aktivieren. Dabei müssen allerdings zusätzlich zulässige Spannungsgrenzen für die jeweilige Blindleistungsquelle berücksichtigt werden.

Erfindungsgemäss werden durch die Einheit zur Datenaufnahme und - auswertung iSSN beispielsweise die Stützstellen der Q(U)-Kennlinie und damit die Blindleistungscharakteristik der zumindest einen Blindleistungsquellen dynamisch geändert Auf diese Weise können beispielsweise die maximal möglichen Betriebsmodi - d.h. maximal mögliche Blindleistungslieferung und maximal möglicher Blindleistungsbezug - der jeweiligen Blindleistungsquelle eingestellt werden. Die Einheit zur Datenaufnahme und -auswertung iSSN kann die jeweilige Blindleistungsquelle z.B. über eine direkten Kommunikationskanal oder z.B. über potentialfreie Schaltkontakte über einen Rundsteuerempfänger und einer entsprechenden Umsetzung in der jeweiligen Blindleistungsquelle beeinflussen.

Eine Reaktion auf das abwechselnde Anfahren der beiden maximal möglichen Betriebsfälle der zumindest einen Blindleistungsquellen im Verteilnetz, welche beispielsweise in Form eines Sprungs in den Blindleistungsmesswerten in der Transformatoreinheit erfolgen kann, wird dann aufgezeichnet und für das Blindleistungsprofil BP des Verteilnetzabschnitt z.B. in der Einheit zur Datenaufnahme und -auswertung iSSN gespeichert werden. Anhand der gemessenen Wirkleistung über die Transformatoreinheit kann auf die aktuelle Einspeisesituation der über die Blindleistungsquellen angebundenen Energieerzeugungseinheiten und damit auf das jeweilige Potential der Blindleistungsquellen in Bezug auf Blindleistungslieferung und -bezug zurückgeschlossen werden. Vom in der Ermittlungsphase 101 ermittelte Blindleistungsprofil BP wird dann ein Zusammenhang bzw. einen Korrelation zwischen einer jeweils im Abschnitt des Verteilnetzes potentiell verfügbaren Blindleistung und den jeweiligen Messwerten, insbesondere für Wirkleistung und Spannung an der Transformatoreinheit, für den jeweiligen Abschnitt des Verteilnetzes beschrieben.

Um Änderungen (z.B. Inbetriebnahme neuer Blindleistungsquellen, Wegfall von Blindleistungsquellen, Topologieänderungen, etc.) im betrachteten Verteilnetzabschnitt bzw. Ortsnetz zeitnah erfassen zu können, kann die Ermittlungsphase 101 bzw. die Ermittlung des Blindleistungsprofils BP des Verteilnetzabschnitts in zeitlich vorgebbaren Abständen bzw. regelmäßig durchgeführt werden. Dadurch können auch Veränderungen des Blindleistungsprofils BP des Verteilnetzabschnitts aufgrund unterschiedlicher Wettersituationen und einer davon abhängigen Einspeiseleistung der zumindest einen Blindleistungsquelle festgestellt werden. Weiterhin können während des aktiven Betriebs auch Reaktionen auf Blindleistungsabfragen bzw. - abrufe in der Abrufphase 103 aufgezeichnet werden, um das Blindleistungsprofil BP des Verteilnetzabschnitts basierend auf diesen Daten nachzuführen.

Basierend auf dem in der Ermittlungsphase 101 ermittelten Blindleistungsprofil BP wird dann in der Abschätzungsphase 102 eine jeweils aktuell im Abschnitt des Verteilnetzes verfügbare und damit abrufbare Blindleistung von der Einheit zur Datenaufnahme und -auswertung iSSN abgeschätzt. Das Abschätzergebnis wird dann dem übergeordneten Steuer- und Regelsystem mitgeteilt. Dazu kann von der Einheit zur Datenaufnahme und - auswertung iSSN das Abschätzergebnis einer im Verteilnetzabschnitt verfügbaren Blindleistung über eine entsprechende Schnittstelle Br wie z.B. einen so genannten AMQP-Broker Br an das übergeordneten Steuer- und Regelsystem SR bzw. an eine Volt/Var-Control- oder VVC-Anwendung übermittelt werden. Als übergeordnete Steuer- und Regelsystem SR kann beispielsweise ein Distribution Management System und/oder ein SCADA-System zum Einsatz kommen.

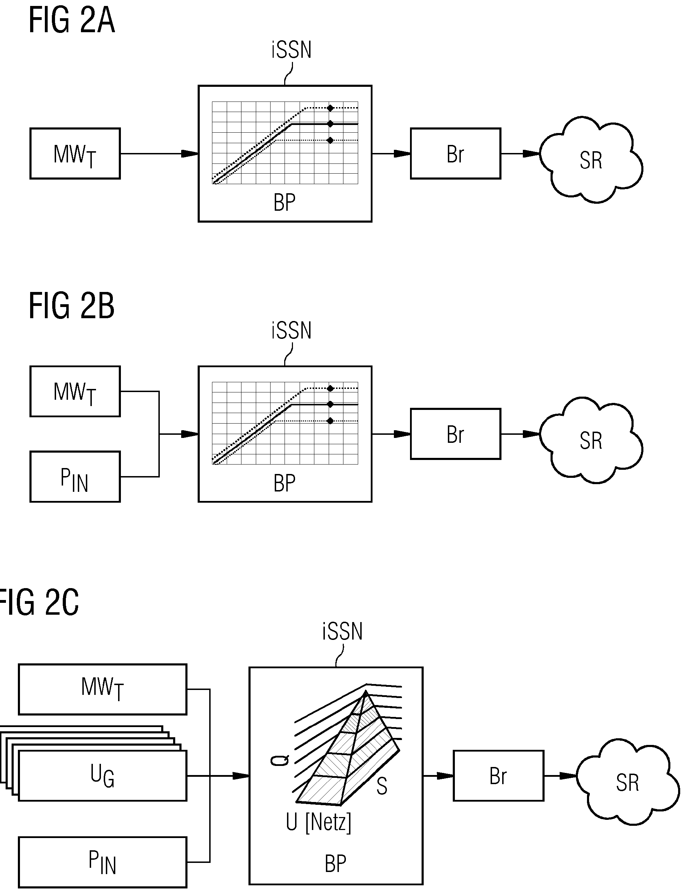

Mögliche Varianten der Abschätzung einer im Verteilnetzabschnitt aktuell verfügbaren Blindleistung in der Abschätzungsphase 102 auf Basis des Blindleistungsprofils BP sind in den Figuren 2a bis 2d beispielshaft dargestellt.

Die Figur 2a zeigt beispielshaft einen Abschätzung der aktuell verfügbaren Blindleistung auf Basis des in der Ermittlungsphase 101 ermittelten Blindleistungsprofils BP, welche z.B. in der Einheit zur Datenaufnahme und -auswertung iSSN gespeichert ist. Dabei werden aktuell gemessene Spannungswerte MW_{T} und Wirkleistungswerte MW_{T} an der Transformatoreinheit verwendet, wobei eine aktuelle Einstellung bzw. eine Stufenstellung der Transformatoreinheit berücksichtigt werden. Daraus wird dann eine aktuell im Verteilnetzabschnitt verfügbare Blindleistung - z.B. lieferbare oder beziehbare Blindleistung - abgeschätzt und über die Schnittstelle Br an das übergeordnete Steuer- und Regelsystem SR übermittelt.

Bei der beispielhaften Abschätzungsvariante, welche in Figur 2b dargestellt ist, wird für die Abschätzung der aktuell verfügbaren Blindleistung bzw. des Blindleistungspotentials im Verteilnetzabschnitt anhand des in der Einheit zur Datenaufnahme und -auswertung iSSN gespeicherten Blindleistungsprofils BP zusätzlich eine Energieeinspeiseleistung P_{IN} berücksichtigt. Auf die jeweilige Energieeinspeiseleistung P_{IN} kann beispielsweise über eine Abschätzung zur jeweils aktuellen Wettersituation zurückgeschlossen werden. Damit wird es einerseits einfacher für verschiedene, z.B. wetterabhängige Einspeisesituationen im Verteilnetzabschnitt getrennte Blindleistungsprofile zu ermitteln bzw. zu nutzen und damit eine Einschätzung eines aktuellen Blindleistungspotentials im Verteilnetzabschnitt zu verbessern. Das abgeschätzte Blindleistungspotential kann dann wieder von der Einheit zur Datenaufnahme und -auswertung iSSN über die Schnittstelle Br an das übergeordnete Steuer- und Regelsystem SR weitergeleitet werden.

Eine weitere Variante der Abschätzung der im Verteilnetzabschnitt aktuell verfügbaren Blindleistung ist beispielhaft in Figur 2c dargestellt. Die in Figur 2c dargestellte Variante stellt eine weitere Verbesserung gegenüber den in Figur 2a und 2b dargestellten Varianten dar. Bei der in Figur 2c dargestellten Variante werden zusätzlich zu den in Figur 2a oder 2b dargestellten Varianten neben den Messwerten MW_{T} von Spannung und Wirkleitung an der Transformatoreinheit und/oder einer Berücksichtigung einer abgeschätzten Energieeinspeiseleistung P_{IN} auch aktuelle Netzspannungswerte U_{G} berücksichtigt, welche an unterschiedlichen Stellen im Verteilnetzabschnitt bzw. Ortsnetz gemessen werden. Das abgeschätzte Blindleistungspotential wird dann wieder von der Einheit zur Datenaufnahme und -auswertung iSSN über die Schnittstelle Br an das übergeordnete Steuer- und Regelsystem SR weitergeleitet werden.

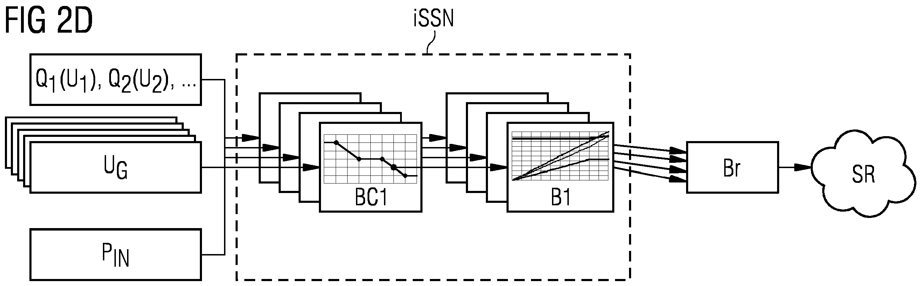

In der Figur 2d ist eine weitere, beispielhafte Variante für die Abschätzung der im Verteilnetzabschnitt aktuell verfügbaren Blindleistung dargestellt, welche als eine Erweiterung bzw. eine Verbesserung zu der in Figur 2c dargestellten Variante gesehen werden kann. Bei einer relativ geringen Anzahl an Blindleistungsquellen im Verteilnetzabschnitt bzw. im Niederspannungs-/Ortsnetz können beispielsweise neben einer abgeschätzten Energieeinspeiseleistung P_{IN} und aktuell gemessenen Netzspannungswerte U_{G} Informationen Q₁ (U₁), Q₂ (U₂), ... zu den im Verteilnetzabschnitt verfügbaren Blindleistungsquellen zum Abschätzen der aktuell verfügbaren Blindleistung genutzt werden. Dazu können z.B. der Einheit zur Datenaufnahme und - auswertung iSSN Informationen Q₁ (U₁), Q₂ (U₂), ... zu sämtlichen Blindleistungsquellen bzw. Wechselrichtereinheiten im Verteilnetzabschnitt zur Verfügung gestellt werden. In der Einheit zur Datenaufnahme und -auswertung iSSN kann beispielsweise zu jeder Blindleistungsquelle bzw. zu jeder Wechselrichtereinheit im Verteilnetzabschnitt eine entsprechende Blindleistungscharakteristik Q₁(U₁), Q₂(U₂), ... bzw. Q(U)-Kennlinie Q₁(U₁), Q₂(U₂), ... hinterlegt sein.

Die Einheit zur Datenaufnahme und -auswertung iSSN weist weiterhin die Möglichkeit auf, die Blindleistungscharakteristik Q₁(U₁), Q₂(U₂), ... der jeweiligen Blindleistungsquellen bzw. Wechselrichtereinheiten zu beeinflussen - z.B. indem von der Einheit zur Datenaufnahme und -auswertung iSSN Kennliniendaten an die jeweiligen Blindleistungsquellen ausgesendet werden. D.h. es liegt Kenntnis über eine spannungsabhängiges Blindleistungsverhalten BC1 der jeweiligen im Verteilnetzabschnitt verfügbaren Blindleistungsquellen bzw. Wechselrichtereinheiten bei der Einheit zur Datenaufnahme und -auswertung iSSN vor. In Kombination mit z.B. Informationen über die aktuell gemessenen Netzspannungswerte U_{G} und z.B. einer topologischen Zuordnung der jeweiligen Blindleistungsquelle zum jeweiligen Spannungsmesspunkt kann ein Arbeitspunkt für jede einzelne im Verteilabschnitt befindliche Blindleistungsquelle bzw. Wechselrichtereinheit bestimmt werden. Daraus kann dann beispielweise basierend auf einer aktuellen Energieeinspeisesituation bzw. einer abgeschätzten Energieeinspeiseleistung P_{IN} eine aktuelle, potentiell verfügbare Blindleistung B1 für die jeweilige Blindleistungsquelle bzw. Wechselrichtereinheit ermittelt werden.

Die Abschätzung ist für jede Blindleistungsquelle bzw. Wechselrichtereinheit durchzuführen und eine im Verteilnetzabschnitt aktuell verfügbare Blindleistung kann dann z.B. durch Summation der für die einzelnen Blindleistungsquellen ermittelten Abschätzungsergebnisse B1 bestimmt werden. Das abgeschätzte für den Verteilnetzabschnitt abgeschätzte Blindleistungspotential wird dann wieder von der Einheit zur Datenaufnahme und -auswertung iSSN über die Schnittstelle Br an das übergeordnete Steuer- und Regelsystem SR weitergeleitet werden.

Die in Figur 2d dargestellte Variante der Abschätzung des in einem Verteilnetzabschnitt potentiell verfügbaren Blindleistungspotential kommt gegebenenfalls ohne experimentelle Bestimmung eines Blindleistungsprofils BP in der Ermittlungsphase 101 aus. Allerdings kann es beispielswiese durch Kapazitäten und Induktivitäten von Kabeln und/oder Freileitungen sowie gegebenenfalls weiteren spannungsabhängigen Blindleistungsquellen im Verteilnetzabschnitt bzw. Niederspannungsnetz zu Kompensationseffekten kommen. Diese Kompensationseffekte sind meist nicht vernachlässigbar, sodass eine Bestimmung eines Blindleistungsprofils BP für den Verteilnetzabschnitt und eine Berücksichtigung mit diesem sinnvoll ist.

Nach einer Abschätzung der im Verteilnetzabschnitt aktuell verfügbaren Blindleistung bzw. des Blindleistungspotentials und Übermittlung der abgeschätzten Blindleistung an ein übergeordnetes Steuer- und Regelsystem SR in der Abschätzungsphase 102 kann in der Abrufphase 103 im Bedarfsfall die aktuell verfügbare Blindleistung abgerufen werden. Dazu kann z.B. von der VVC-Anwendung im übergeordneten Steuer- und Regelsystem SR ein Bedarf festgestellt werden und an die Einheit zur Datenaufnahme und -auswertung iSSN ein entsprechender Stellbefehl übermittelt werden. In diesem Stellbefehl kann beispielweise eine erforderliche Höhe sowie einen Richtung (d.h. Lieferung oder Bezug) für die zur Verfügung zu stellende Blindleistung enthalten sein.

Von der Einheit zur Datenaufnahme und -auswertung iSSN wird dann gemäß den jeweiligen Möglichkeiten der Stellbefehl umgesetzt. Dazu können durch die Einheit zur Datenaufnahme und - auswertung iSSN beispielsweise die Einstellung bzw. Stufenstellung der Transformatoreinheit angepasst werden und/oder z.B. durch Aussenden neuer Kennlinienstützstellen für die Blindleistungscharakteristiken bzw. Q(U)-Kennlinie die Blindleistungsquellen im Verteilnetzabschnitt entsprechend beeinflusst werden. Durch Mitprotokollieren von Reaktionen des Verteilnetzabschnittes und der darin verfügbaren bzw. installierten Blindleistungsquellen bzw. Wechselrichtereinheiten auf einen Umsetzung der jeweiligen Stellbefehle kann das in der Ermittlungsphase 101 ermittelte Blindleistungsprofil BP des Verteilnetzabschnitt zusätzlich laufend angepasst und verbessert werden.

## Patentansprüche

1. Verfahren zur Nutzbarmachung einer in einem Abschnitt eines Verteilnetzes, insbesondere eines Niederspannungsnetzes, verfügbaren Blindleistung, wobei der Abschnitt des Verteilnetzes zumindest eine Blindleistungsquelle, eine über eine Wechselrichtereinheit angebundene dezentrale Energieerzeugungseinheit in Form einer Photovoltaik-Anlage, aufweist, ***dadurch gekennzeichnet, dass*** der zumindest einen Blindleistungsquelle Betriebsfälle vorgegebenen werden, welche jeweils durch eine dynamische Änderung einer jeweiligen Blindleistungscharakteristik erreicht werden, bei welchen von der zumindest einen Blindleistungsquelle eine maximal mögliche Blindleistungslieferung und ein maximal möglicher Blindleistungsbezug erfolgt, dass mittels der für die zumindest eine Blindleistungsquelle vorgegebenen Betriebsfälle ein Blindleistungsprofil (BP) für den Abschnitt des Verteilnetzes ermittelt wird (101), wobei die zumindest eine Blindleistungsquelle über eine Einheit zur Datenaufnahme und -auswertung (iSSN) derart beeinflusst wird, dass von der zumindest einen Blindleistungsquelle die vorgegebenen Betriebsfälle durchlaufen werden, dass von der Einheit zur Datenaufnahme und -auswertung (iSSN) laufend anhand des für den Abschnitt des Verteilnetzes ermittelten Blindleistungsprofils die jeweils aktuell im Abschnitt des Verteilnetzes verfügbare Blindleistung abgeschätzt wird und die abgeschätzte Blindleistung einem übergeordnetes Steuer- und Regelsystem (SR) mitgeteilt wird (102), und dass im Bedarfsfall vom Abschnitt des Verteilnetzes die aktuell verfügbare Blindleistung abgerufen wird, wobei vom übergeordneten Steuer- und Regelsystem (SR) ein entsprechender Stellbefehl mit einer erforderlichen Höhe und Richtung einer zur Verfügung zu stellenden Blindleistung an die Einheit (iSSN) zur Datenaufnahme und -auswertung gesendet wird (103).

2. Verfahren nach Anspruch 1, ***dadurch gekennzeichnet, dass*** vom jeweils ermittelten Blindleistungsprofil (BP) ein Zusammenhang zwischen einer jeweils im Abschnitt des Verteilnetzes verfügbaren Blindleistung und jeweiligen Messwerten für den Abschnitt des Verteilnetzes, insbesondere eines Wirkleistungs- und Spannungsmesswertes an einer Transformatoreinheit, beschrieben wird (101).

3. Verfahren nach einem der Ansprüche 1 bis 2, ***dadurch gekennzeichnet, dass*** eine Ermittlung des aktuellen Blindleistungsprofil (BP) für den Abschnitt des Verteilnetzes in zeitlich vorgebbaren Abständen durchgeführt wird.

4. Verfahren nach einem der Ansprüche 1 bis 3, ***dadurch gekennzeichnet, dass*** zum Abschätzen der jeweils aktuell im Abschnitt des Verteilnetzes verfügbaren Blindleistung für den Abschnitt des Verteilnetzes aktuell gemessene Spannungs- und Wirkleistungswerte (MW_{T}) an der Transformatoreinheit verwendet werden (102), wobei eine aktuelle Einstellung der Transformatoreinheit berücksichtigt wird.

5. Verfahren nach Anspruch 4, ***dadurch gekennzeichnet, dass*** zusätzlich eine Energieeinspeiseleistung (P_{IN}) der zumindest einen Blindleistungsquelle berücksichtigt wird (102), welche anhand einer aktuellen Wettersituation abgeschätzt wird.

6. Verfahren nach einem der Ansprüche 4 oder 5, ***dadurch gekennzeichnet, dass*** weiterhin für die Abschätzung der jeweils aktuell im Abschnitt des Verteilnetzes verfügbaren Blindleistung aktuelle Netzspannungswerte (U_{G}) verwendet werden (102), welche verteilt im Abschnitt des Verteilnetzes gemessen werden.

7. Verfahren nach Anspruch 6, ***dadurch gekennzeichnet, dass*** für die Abschätzung der jeweils aktuell im Abschnitt des Verteilnetzes verfügbaren Blindleistung weiterhin Informationen (Q₁(U₁), Q₂(U₂),...) zu der zumindest einen im Abschnitt des Verteilnetzes verfügbaren Blindleistungsquelle, insbesondere eine so genannte Blindleistungscharakteristik oder Q(U)-Kennlinie, verwendet werden (102).

8. Verfahren nach einem der vorangegangenen Ansprüche,
***dadurch gekennzeichnet, dass*** die Abschätzung der jeweils aktuell im Abschnitt des Verteilnetzes verfügbaren Blindleistung von Einheit zur Datenaufnahme und - auswertung (iSSN) über eine Schnittstelle (Br) an das übergeordnete Steuer- und Regelsystem (SR), insbesondere an eine Volt/Var-Control-Anwendung übermittelt wird (102) .

9. Verfahren nach einem der vorangegangenen Ansprüche,
***dadurch gekennzeichnet, dass*** die Einheit zur Datenaufnahme und -auswertung (iSSN) in oder bei der Transformatoreinheit angebracht wird.

## Claims

1. Method for harnessing a reactive power available in a section of a distribution network, in particular a low-voltage network, wherein the section of the distribution network has at least one reactive power source and a decentralized energy generation unit in the form of a photovoltaic system connected via an inverter unit, ***characterized in that*** operating situations, which are each achieved by dynamically changing a respective reactive power characteristic and in which the at least one reactive power source supplies a maximum possible reactive power and draws a maximum possible reactive power, are specified to the at least one reactive power source, **in that** a reactive power profile (BP) for the section of the distribution network is determined (101) by means of the operating situations predefined for the at least one reactive power source, wherein the at least one reactive power source is influenced via a data acquisition and evaluation unit (iSSN) in such a manner that the at least one reactive power source runs through the predefined operating situations, **in that** the data acquisition and evaluation unit (iSSN) continuously estimates the reactive power currently available in each case in the section of the distribution network on the basis of the reactive power profile determined for the section of the distribution network and communicates (102) the estimated reactive power to a superordinate control and regulating system (SR), and **in that** the section of the distribution network retrieves the currently available reactive power if necessary, wherein a corresponding setting command with a required level and direction of a reactive power to be provided is transmitted (103) from the superordinate control and regulating system (SR) to the data acquisition and evaluation unit (iSSN).

2. Method according to Claim 1, ***characterized in that*** a relationship between a reactive power available in each case in the section of the distribution network and respective measured values for the section of the distribution network, in particular an active power and voltage measured value at a transformer unit, is described (101) by the respectively determined reactive power profile (BP).

3. Method according to one of Claims 1 to 2, ***characterized in that*** the current reactive power profile (BP) is determined for the section of the distribution network at predefinable intervals of time.

4. Method according to one of Claims 1 to 3, ***characterized in that*** voltage and active power values (MW_{T}) currently measured for the section of the distribution network at the transformer unit are used (102) to estimate the reactive power currently available in each case in the section of the distribution network, wherein a current setting of the transformer unit is taken into account.

5. Method according to Claim 4, ***characterized in that*** an energy feed-in power (P_{IN}) of the at least one reactive power source, which is estimated on the basis of a current weather situation, is additionally taken into account (102).

6. Method according to either of Claims 4 and 5, ***characterized in that*** current network voltage values (U_{G}), which are measured in a distributed manner in the section of the distribution network, are also used (102) to estimate the reactive power currently available in each case in the section of the distribution network.

7. Method according to Claim 6, ***characterized in that*** information (Q₁(U₁), Q₂(U₂), ...) relating to the at least one reactive power source available in the section of the distribution network, in particular a so-called reactive power characteristic or Q(U) characteristic curve, is also used (102) to estimate the reactive power currently available in each case in the section of the distribution network.

8. Method according to one of the preceding claims, ***characterized in that*** the estimation of the reactive power currently available in each case in the section of the distribution network is transmitted from the data acquisition and evaluation unit (iSSN) to the superordinate control and regulating system (SR), in particular to a volt/var control application, via an interface (Br).

9. Method according to one of the preceding claims, ***characterized in that*** the data acquisition and evaluation unit (iSSN) is fitted in or at the transformer unit.

## Revendications

1. Procédé pour l'utilisation d'une puissance réactive disponible dans une section d'un réseau de distribution, en particulier d'un réseau basse tension, dans lequel la section du réseau de distribution comprend au moins une source de puissance réactive, une unité de production d'énergie décentralisée, connectée par l'intermédiaire d'une unité d'onduleur, sous la forme d'une installation photovoltaïque, **caractérisé en ce que**, pour l'au moins une source de puissance réactive, sont prédéfinis des cas de fonctionnement, lesquels sont atteints respectivement par une modification dynamique d'une caractéristique de puissance réactive respective, pour lesquels s'effectuent une fourniture de puissance réactive maximale possible et une perception de puissance réactive maximale possible par l'au moins une source de puissance réactive, **en ce qu'**au moyen des cas de fonctionnement prédéfinis pour l'au moins une source de puissance réactive, un profil de puissance réactive (BP) est déterminé (101) pour la section du réseau de distribution, dans lequel l'au moins une source de puissance réactive est influencée par l'intermédiaire d'une unité pour la réception et l'évaluation de données (iSSN) de telle sorte que l'au moins une source de puissance réactive passe par les cas de fonctionnement prédéfinis, que la puissance réactive respectivement disponible réellement dans la section du réseau de distribution soit estimée par l'unité pour la réception et l'évaluation de données (iSSN) en continu à l'aide du profil de puissance réactive déterminé pour la section du réseau de distribution et la puissance réactive estimée soit communiquée (102) à un système de commande et de régulation (SR) supérieur, et qu'en cas de besoin la puissance réactive disponible réellement soit récupérée par la section du réseau de distribution, dans lequel un ordre de réglage correspondant avec une hauteur et une direction nécessaires d'une puissance réactive devant être mise à disposition est envoyé (103) par le système de commande et de régulation (SR) supérieur à l'unité (iSSN) pour la réception et l'évaluation de données.

2. Procédé selon la revendication 1, **caractérisé en ce qu'**une relation entre une puissance réactive respectivement disponible dans la section du réseau de distribution et des valeurs de mesure respectives pour la section du réseau de distribution, en particulier une valeur de mesure de puissance active et de tension au niveau d'une unité de transformateur, est décrite (101) par le profil de puissance réactive (BP) respectivement déterminé.

3. Procédé selon l'une des revendications 1 à 2, **caractérisé en ce qu'**une détermination du profil de puissance réactive (BP) réel pour la section du réseau de distribution est menée à intervalles pouvant être prédéfinis dans le temps.

4. Procédé selon l'une des revendications 1 à 3, **caractérisé en ce que**, pour l'estimation de la puissance réactive respectivement disponible réellement dans la section du réseau de distribution, des valeurs de tension et de puissance active mesurées réellement (MW_{T}) pour la section du réseau de distribution sont utilisées (102) au niveau de l'unité de transformateur, dans lequel un ajustement réel de l'unité de transformateur est pris en considération.

5. Procédé selon la revendication 4, **caractérisé en ce que**, de plus, est prise en considération (102) une puissance d'injection d'énergie (P_{IN}) de l'au moins une source de puissance réactive, laquelle est estimée à l'aide d'une situation météorologique réelle.

6. Procédé selon l'une des revendications 4 ou 5, **caractérisé en ce que**, en outre, pour l'estimation de la puissance réactive respectivement disponible réellement dans la section du réseau de distribution, sont utilisées (102) des valeurs de tension de réseau réelles (U_{G}), lesquelles sont mesurées de manière distribuée dans la section du réseau de distribution.

7. Procédé selon la revendication 6, **caractérisé en ce que**, pour l'estimation de la puissance réactive respectivement disponible réellement dans la section du réseau de distribution, sont en outre utilisées (102) des informations (Q₁(U₁), Q₂(U₂), ...) pour l'au moins une source de puissance réactive disponible dans la section du réseau de distribution, en particulier une caractéristique appelée caractéristique de puissance réactive ou caractéristique Q (U) .

8. Procédé selon l'une des revendications précédentes, **caractérisé en ce que** l'estimation de la puissance réactive respectivement disponible réellement dans la section du réseau de distribution est transmise (102) par l'unité pour la réception et l'évaluation de données (iSSN) par l'intermédiaire d'un port (Br) au système de commande et de régulation (SR) supérieur, en particulier à une application de contrôle Volt/Var.

9. Procédé selon l'une des revendications précédentes, **caractérisé en ce que** l'unité pour la réception et l'évaluation de données (iSSN) est montée dans ou à proximité de l'unité de transformateur.
